(19)

Europäisches Patentamt

European Patent Office

Office européen des brevets

(11) **EP 4 243 119 A1**

(12) **EUROPEAN PATENT APPLICATION**

(43) Date of publication:
**13.09.2023 Bulletin 2023/37**

(21) Application number: **23160523.9**

(22) Date of filing: **07.03.2023**

(51) International Patent Classification (IPC):
*H01M 4/36* $^{(2006.01)}$       *H01M 4/38* $^{(2006.01)}$
*H01M 4/587* $^{(2010.01)}$      *H01M 4/62* $^{(2006.01)}$

(52) Cooperative Patent Classification (CPC):
**H01M 4/366; H01M 4/386; H01M 4/587;**
**H01M 4/62;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022 KR 20220028790**

(71) Applicant: **SK On Co., Ltd.**
**Seoul 03161 (KR)**

(72) Inventors:
• YOO, Seok Keun
  34124 Daejeon (KR)
• PARK, Gwi Ok
  34124 Daejeon (KR)
• CHUNG, Ju Ho
  34124 Daejeon (KR)

(74) Representative: **Stolmár & Partner**
**Patentanwälte PartG mbB**
**Blumenstraße 17**
**80331 München (DE)**

(54) **ANODE ACTIVE MATERIAL FOR LITHIUM SECONDARY BATTERY AND LITHIUM SECONDARY BATTERY INCLUDING THE SAME**

(57)     An anode active material for a secondary battery according to an embodiment of the present invention includes a carbon-based particle containing pores, a silicon-containing coating layer formed at an inside of the pores or on a surface of the carbon-based particle, and a carbon coating formed on the silicon-containing coating layer. A ratio of a peak intensity ($I_D$) of a D band relative to a peak intensity ($I_G$) of a G band in a Raman spectrum of the carbon coating is 1.65 or less.

EP 4 243 119 A1

**Description**

BACKGROUND

1. Field

The present invention relates to an anode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery has been developed and applied as a power source for an eco-friendly vehicle such as an electric vehicle.
The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.
For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.
Recently, as an application range of the lithium secondary battery is expanded, the lithium secondary battery having higher capacity and power has been researched. For example, a composite of silicon and carbon may be used as an anode active material to increase a capacity.
However, the silicon-carbon composite anode active material may have a large difference of volume expansion ratios to cause cracks in the anode active material and exposure to the electrolyte during repeated charging/discharging.
Accordingly, an anode active material capable of maintaining the capacity while suppressing the cracks is required. For example, Korean Registered Patent Publication No. 10-1591698 discloses an anode active material containing silicon oxide, which may not provide sufficient life-span and power properties.

SUMMARY

According to an aspect of the present invention, there is provided an anode active material for a lithium secondary battery having improved power property and capacity efficiency.
According to an aspect of the present invention, there is provided a lithium secondary battery having improved power property and capacity efficiency.
An anode active material for a lithium secondary battery includes a carbon-based particle containing pores, a silicon-containing coating layer formed at an inside of the pores or on a surface of the carbon-based particle, and a carbon coating formed on the silicon-containing coating layer. A ratio of a peak intensity ($I_D$) of a D band relative to a peak intensity ($I_G$) of a G band in a Raman spectrum of the carbon coating is 1.65 or less.
In some embodiments, a carbon content of the surface of the anode active material measured by an X-ray photoelectron spectroscopy (XPS) relative to a silicon content of the surface measured by the XPS may be in a range from 200% to 500%.
In some embodiments, the carbon-based particle may include at least one selected from the group consisting of activated carbon, a carbon nanotube, a carbon nanowire, graphene, a carbon fiber, carbon black, graphite, a porous carbon, a pyrolyzed cryogel, a pyrolyzed xerogel and a pyrolyzed aerogel.
In some embodiments, the carbon-based particle may have an amorphous structure.
In some embodiments, the silicon-containing coating layer and the carbon coating may not contain silicon carbide (SiC).
In some embodiments, the carbon coating may be also formed on a portion where the silicon-containing coating layer is not formed among the inside of the pores and the surface of the carbon-based particle.
A lithium secondary battery includes an anode including an anode active material layer that includes the anode active material for a lithium secondary battery according to embodiments as described above, and a cathode facing the anode.
In a method of preparing an anode active material for a secondary battery, a first firing of a carbon-based particle and a silicon source is performed to form a silicon-containing coating layer at an inside of the pores or on a surface of the carbon-based particle. A carbon source is injected to the carbon-based particle on which the silicon-containing coating layer is formed to form a carbon coating. A ratio of a peak intensity ($I_D$) of a D band relative to a peak intensity ($I_G$) of a G band in a Raman spectrum of the carbon coating is 1.65 or less.

In some embodiments, the carbon source nay include at least one selected from the group consisting of pitch, glucose, sucrose, a phenol-based hydrocarbon, a resorcinol-based hydrocarbon, a methane gas, an ethylene gas, a propylene gas, an acetylene gas, a polyacetylene, a polyaniline, a polypyrrole and polythiophene.

In some embodiments, the forming of the carbon coating may include a second firing performed at a temperature from 550 °C to 700 °C.

In some embodiments, the second firing may be performed for a period from 60 minutes to 120 minutes.

In some embodiments, the first firing may be performed at a temperature less than 600 °C.

In one aspect of the present invention, an anode active material for a lithium secondary battery prepared by a method that includes performing a first firing of a carbon-based particle and a silicon source to form a silicon-containing coating layer at an inside of the pores or on a surface of the carbon-based particle; and injecting a carbon source to the carbon-based particle on which the silicon-containing coating layer is formed to form a carbon coating is provided.

In one aspect of the present invention, a lithium secondary battery including the anode active material prepared by the above-described method is provided.

According to embodiments of the present invention, a carbon-based particle may include pores. For example, the carbon-based particle may be a porous particle including a plurality of pores. In this case, a silicon-containing coating layer may be formed at an inside and/or on the surfaces of the pores. Accordingly, cracks due to a difference in volume expansion ratios between carbon and silicon during charging and discharging of a lithium secondary battery may be prevented.

In exemplary embodiments, a carbon coating may be formed on the silicon-containing coating layer. Accordingly, a contact between silicon of an anode active material and a moisture in an air or a contact between silicon and water in the anode slurry may be prevented. Thus, a reduction of discharge capacity and capacity efficiency of the secondary battery may be suppressed during a period from a preparation of the anode active material to a formation of an anode.

In exemplary embodiments, a ratio of a peak intensity ($I_D$) of a D band to a peak intensity ($I_G$) of a G band from a Raman spectrum obtained by a Raman spectroscopic analysis of the carbon coating may be 1.65 or less. Accordingly, defects of the carbon-based material in the carbon coating may be reduced and the carbon coating may be stably formed. Thus, damages to the anode active material caused by repeated charging and discharging of the lithium secondary battery may be effectively suppressed to improve life-span properties.

BRIEF DESCRIPTION OF THE DRAWINGS

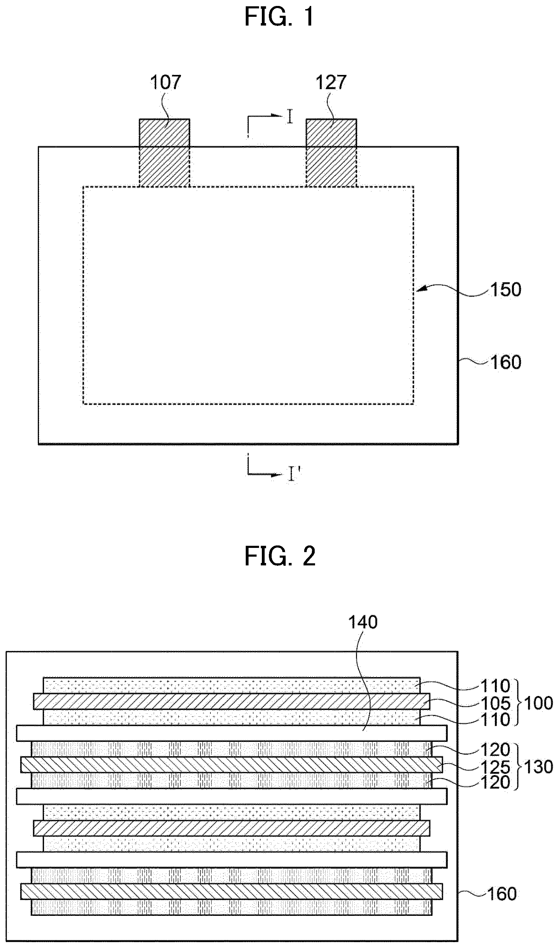

FIGS. 1 and 2 are a schematic plan view and a schematic cross-sectional view illustrating a secondary battery in accordance with exemplary embodiments.

DETAILED DESCRIPTION OF THE EMBODIMENTS

According to embodiments of the present invention, an anode active material for a lithium secondary battery (hereinafter, that may be abbreviated as "anode active material") including a carbon-silicon composite. Further, a lithium secondary battery (hereinafter, that may be abbreviated as "secondary battery") including the anode active material is provided.

Hereinafter, detailed descriptions of the present invention will be described in detail with reference to exemplary embodiments. However, those skilled in the art will appreciate that such embodiments are provided to further understand the spirit of the present invention and do not limit subject matters to be protected as disclosed in the detailed description and appended claims.

The anode active material includes both silicon and carbon-based particle. An anode active material may include a plurality of the carbon-based particles. In this case, capacity properties may be improved, and a volume expansion of silicon may be partially alleviated by carbon.

However, during charging and discharging of the secondary battery, a difference between a volume expansion ratio of silicon (e.g., about 400% or more) and a volume expansion ratio of carbon (e.g., about 150% or less) may be increased, resulting in cracks in the anode active material. Accordingly, during the repeated charging and discharging, the anode active material may be exposed to an electrolyte to cause side reactions such as gas generation and degrade life-span properties of the secondary battery.

The carbon-based particle includes pores. For example, the carbon-based particle may be a porous particle including a plurality of pores. In this case, a silicon-containing coating layer may be formed at an inside of the pores and on a surface of the carbon-based particle. Accordingly, cracks due to the difference in volume expansion ratios between carbon and silicon during charging and discharging of the secondary battery may be prevented.

In exemplary embodiments, the carbon-based particle may have a pore size of 20 nm or less, and preferably less than 10 nm. Within this range, excessive deposition of silicon in the pores may be prevented. Accordingly, the difference in volume expansion ratios between carbon and silicon may be further reduced during charging and discharging of the secondary battery.

In some embodiments, the pore size of the carbon-based particle may be in a range from 0.1 nm to 20 nm, or from 0.1 nm to 10 nm.

For example, the above-mentioned carbon-based particle may include activated carbon, a carbon nanotube, a carbon nanowire, graphene, a carbon fiber, carbon black, graphite, a porous carbon, a pyrolyzed cryogel, a pyrolyzed xerogel, a pyrolyzed aerogel, etc. These may be used alone or in a combination thereof.

The anode active material includes the silicon-containing coating layer formed at the inside of the pores included in the carbon-based particle and/or on the surface of the carbon-based particle. The difference of volume expansion ratios between carbon and silicon may be buffered or alleviated while employing high capacity properties of silicon included in the silicon-containing coating layer.

Accordingly, microcracks and exposure to the electrolyte solution due to the repeated charging and discharging of the secondary battery may be reduced. Thus, life-span properties may be improved while maintaining power properties of the secondary battery.

The silicon-containing coating layer may refer to a layer in which silicon particles are formed on at least a portion of the pores and/or the surfaces of carbon-based particles.

For example, silicon included in the above-described silicon-containing coating layer may easily react with a moisture in an air or water in an anode slurry on the surface of the anode active material. For example, according to reactions of Reaction Formula 1 and Reaction Formula 2, silicon may be irreversibly converted into a silicon compound, and gas may be generated.

$$[\text{Reaction Formula 1}] \qquad Si + 4H_2O \rightarrow Si(OH)_4 + 2H_2 \ (g)\uparrow$$

$$[\text{Reaction Formula 2}] \qquad Si + 2H_2O \rightarrow SiO_2 + 2H_2 \ (g)\uparrow$$

Accordingly, a discharge capacity and a capacity efficiency of the secondary battery may be lowered due to the moisture in the air or water of the anode slurry during a period from a preparation of the anode active material to a formation of the anode.

A carbon coating is formed on the above-described silicon-containing coating layer. Accordingly, a contact between silicon of the anode active material and the moisture in the air or a contact between silicon and water in the anode slurry may be prevented. Thus, reduction of the discharge capacity and the capacity efficiency of the secondary battery may be suppressed during the period from the preparation of the anode active material to the formation of the anode.

The carbon coating layer may refer to a layer in which carbon particles are formed on at least a portion of the silicon-containing coating layer.

In some embodiments, the carbon coating may include at least one of carbon and a conductive polymer. Accordingly, the above-described effect of preventing the contact between water and silicon may be implemented while the formation of the carbon coating may be promoted. Thus, the reduction of the discharge capacity and the capacity efficiency of the secondary battery may be prevented.

For example, the conductive polymer may include polyacetylene, polyaniline, polypyrrole and/or polythiophene.

In some embodiments, the carbon coating may also be formed at the inside and the surface of the pores of the carbon-based particle on which the silicon-containing coating layer is not formed. In an embodiment, the carbon coating may entirely cover silicon and the carbon-based particle on the carbon-based particles on which the silicon-containing coating layer is formed. Accordingly, mechanical stability and chemical stability of the anode active material may be improved while preventing the contact between silicon included in the silicon-containing coating layer and water.

A ratio of a peak intensity $(I_D)$ of a D band relative to a peak intensity $(I_G)$ of a G band in a Raman spectrum obtained by a Raman spectroscopic analysis of the carbon coating (a Raman R value $(I_D/I_G)$) may be 1.65 or less.

The peak intensity $(I_G)$ of the G band is the peak intensity in a wavenumber region from about 1,540 cm$^{-1}$ to about 1,620 cm$^{-1}$ in the Raman spectrum, and the peak intensity $(I_D)$ of the D band is a peak intensity for a wavenumber region from about 1,300 cm$^{-1}$ to about 1,420 cm$^{-1}$.

For example, the peak of the G band may be commonly found in a graphite-based material, and may appear when carbon atoms constituting a hexagonal structure are present. For example, the peak of the D band may be generated by a symmetrical vibration mode and is not observed in a perfect lattice structure. For example, the peak of the D band may appear when the hexagonal structure does not develop widely or when defects are present in the hexagonal structure.

For example, the Raman R value may vary with changes in a thickness, a uniformity and a structural stability of the carbon coating.

For example, the Raman R value may be an average value of values obtained through the Raman spectroscopy from 3 to 100 points in a selected area within the carbon coating.

The Raman spectroscopy may be performed using a Raman spectrometer widely known in the art. For example, a laser wavelength of the Raman spectrometer may be in a range from about 532 nm to about 785 nm, a laser power may be in a range from about 5 mW to about 90 mW, a laser exposure time may be in a range from about 3 seconds to about 20 seconds, and the number of scan may be in a range from 1 to 5.

If the Raman R value is 1.65 or less, defects of a carbon-based material in the carbon coating may be reduced and the carbon coating may be stably formed. Accordingly, damages to the anode active material caused by the repeated charging and discharging of the secondary battery may be effectively suppressed, and the life-span properties may be improved.

If the Raman R value exceeds 1.65, structural defects of the carbon-based material in the carbon coating may be increased and the carbon coating may be formed non-uniformly or insufficiently. Accordingly, silicon of the silicon-containing coating layer may react with the electrolyte or water, and the life-span properties of the secondary battery may be deteriorated.

In some embodiments, the above-described anode active material may have a surface carbon content measured through an X-ray photoelectron spectroscopy (XPS) in a range from 200% to 500% relative to a surface silicon content measured through the XPS.

For example, the number of carbon atoms present on the surface of the anode active material may be 2 to 5 times greater than the number of silicon atoms present on the surface.

When the content ratio of carbon to silicon on the surface of the anode active material satisfies the above range, the carbon coating may be sufficiently formed on am outermost surface of the anode active material to suppress a side reaction of silicon included in the silicon-containing coating layer. Accordingly, the life-span properties of the secondary battery may be improved.

In some embodiments, an average particle diameter (D50) of the above-described anode active material may be in a range from 3 μm to 15 μm. Within this range, the carbon coating may be sufficiently formed on the outermost surface while achieving sufficient capacity. Accordingly, the capacity and life-span properties of the secondary battery may be improved.

As used herein, the term "average particle diameter," "average particle diameter (D50)," or "D50" may refer to a particle diameter when a volumetric cumulative percentage corresponds to 50% in a particle size distribution obtained based on a particle volume.

In some embodiments, the silicon-containing coating layer and the carbon coating described above may not include silicon carbide (SiC). Accordingly, the capacity of the secondary battery may not be decreased due to the reaction between silicon and carbon. Thus, the capacity properties of the secondary battery may be improved.

For example, silicon carbide may not be formed at the inside of the pores of the carbon-based particle or on the surface of the carbon-based particles. For example, the silicon-containing coating layer may not include silicon carbide. For example, the silicon-containing coating layer may contain only silicon and/or silicon oxide. Thus, the capacity properties of the secondary battery may be improved.

For example, the formation of silicon carbide may be suppressed by adjusting a temperature and a time during a silicon deposition.

Hereinafter, a manufacturing method according to exemplary embodiments of the anode active material for a lithium secondary battery described above is provided.

In exemplary embodiments, carbon-based particles including pores may be prepared.

In some embodiments, a resol oligomer may be prepared by mixing an aromatic compound containing a hydroxyl group with an aldehyde-based compound. For example, the aromatic compound including the hydroxyl group may include phenol, and the aldehyde-based compound may include formaldehyde. After curing by adding a curing agent to the resol oligomer, the carbon-based particles including pores may be obtained by classification, washing with water and firing.

In some embodiments, an aromatic compound and a vinyl-based compound may be mixed and polymerized. Thereafter, the carbon-based particles including pores may be obtained by washing with water and firing. For example, the aromatic compound may include polystyrene, and the vinyl-based compound may include divinylbenzene.

In some embodiments, an activation process may be performed. In this case, an activity of a porous structure of the carbon-based particles may be easily controlled.

In an embodiment, the activation process may include a physical activation method. For example, in the activation, a gas reactive with carbon (steam, a carbon dioxide gas or a mixed gas of steam, carbon dioxide gas and an inert gas) may be introduced and a heat treatment may be performed at a temperature in a range from 700 °C to 1,000 °C.

In an embodiment, the activation process may include a chemical activation method. For example, an acidic or a basic chemical such as KOH, $Na_2CO_3$, NaOH and $H_3PO_4$ may be used as an activator. The chemical activation method may be performed at a lower temperature than that in the physical activation method.

A size of pores included in the carbon-based particles obtained by the above method may be 20 nm or less.

In exemplary embodiments, a silicon source may be introduced in a reactor in which the carbon-based particles are placed, and then a first firing may be performed to deposit a silicon-containing coating layer at an inside of the pores or on surfaces of the carbon-based particles.

For example, the silicon source may include a silicon-containing gas. In an embodiment, the silicon-containing gas may include a silane gas.

In some embodiments, the first firing may be performed at a temperature less than 600 °C. Within the above temperature range, silicon having an amorphous structure may be sufficiently included in the silicon-containing coating layer. Accordingly, mechanical stability of the anode active material may be improved during a press process or repeated charging and discharging of the secondary battery.

In exemplary embodiments, a carbon coating may be formed on a surface of the silicon-containing coating layer by introducing a carbon source into the reactor where the carbon-based particles on which the silicon-containing coating layer is deposited are located. A ratio of a peak intensity ($I_D$) of a D band to a peak intensity ($I_G$) of a G band in a Raman spectrum obtained by a Raman spectroscopic analysis of the carbon coating (a Raman R value) may be adjusted as being 1.65 or less by the carbon coating layer. Accordingly, the carbon coating may protect the silicon-containing coating layer while providing structural stability and uniformity.

In some embodiments, the carbon source may include pitch, glucose, sucrose, a phenol-based hydrocarbons and/or a resorcinol-based hydrocarbon. In this case, a second firing may be performed after the introduction of the carbon source.

In some embodiments, the carbon source may include a methane gas, an ethylene gas, a propylene gas, an acetylene gas, etc. These may be used alone or in a combination thereof. In this case, the carbon coating layer may be formed by a chemical vapor deposition (CVD). For example, the chemical vapor deposition may be performed by applying the carbon source and performing the second firing.

In some embodiments, the carbon source may include a conductive polymer including at least one of polyacetylene, polyaniline, polypyrrole and polythiophene. In this case, the formation of the carbon coating may be performed by a chemical vapor deposition, an electro-polymerization or a solution process.

In an embodiment, the conductive polymer may be modified with carbon by performing the second firing after coating the conductive polymer.

In some embodiments, the second firing may be performed at a temperature from 550 °C to 700 °C, preferably from 550 °C to 650 °C. Within this range, a ratio of an amorphous structure in carbon included in the carbon coating and silicon included in the silicon-containing coating layer may be sufficiently increased. Accordingly, mechanical stability of the anode active material may be improved during the press process or repeated charging and discharging of the secondary battery.

Additionally, in the temperature range of the second firing, structural stability of the carbon-based material included in the carbon coating may be improved and defects may be reduced. Thus, the carbon coating having the Raman R value of 1.65 or less may be easily formed.

For example, the second firing may be performed for 60 minutes to 120 minutes. Within the above range, defects of a crystal structure in the carbon coating may be prevented while sufficiently forming the carbon coating. Accordingly, the life-span properties of the secondary battery may be improved.

FIGS. 1 and 2 are a schematic plan view and a schematic cross-sectional view, respectively, illustrating a secondary battery according to exemplary embodiments. For example, FIG. 2 is a cross-sectional view taken along a line I-I' in FIG. 1 in a thickness direction of the lithium secondary battery.

Referring to FIGS. 1 and 2, a lithium secondary battery may include an electrode assembly including an anode 130, a cathode 100 and a separation layer 140 interposed between the cathode and the anode. The electrode assembly may be accommodated and impregnated with an electrolyte in a case 160 .

The cathode 100 may include a cathode active material layer 110 formed by coating a mixture containing a cathode active material on a cathode current collector 105.

The cathode current collector 105 may include aluminum, stainless steel, nickel, titanium, or an alloy thereof, or aluminum or stainless steel surface-treated with carbon, nickel, titanium, silver, etc.

The cathode active material may include a compound capable of reversibly intercalating and de-intercalating lithium ions.

In exemplary embodiments, the cathode active material may include a lithium-transition metal oxide. For example, the lithium-transition metal oxide includes nickel (Ni) and may further include at least one of cobalt (Co) and manganese (Mn).

For example, the lithium-transition metal oxide may be represented by Chemical Formula 1 below.

[Chemical Formula 1]     $Li_xNi_{1-y}M_yO_{2+z}$

In Chemical Formula 1, $0.9 < x < 1.2$, $0 \leq y \leq 0.7$, and $-0.1 \leq z \leq 0.1$. M may include at least one element selected from Na, Mg, Ca, Y, Ti, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be greater than or equal to 0.8, and may exceed 0.8 in preferable embodiment.

The mixture may be prepared by mixing and stirring the cathode active material in a solvent with a binder, a conductive material and/or a dispersive agent. The mixture may be coated on the cathode current collector 105, and then dried and pressed to form the cathode 100.

The solvent may include a non-aqueous solvent. For example, N-methyl-2-pyrrolidone (NMP), dimethylformamide, dimethylacetamide, N,N-dimethylaminopropylamine, ethylene oxide, tetrahydrofuran, etc., may be used.

For example, the binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be included to promote an electron movement between active material particles. For example, the conductive material may include a carbon-based conductive material such as graphite, carbon black, graphene, carbon nanotube, etc., and/or a metal-based conductive material such as tin, tin oxide, titanium oxide, a perovskite material such as $LaSrCoO_3$, $LaSr_4MnO_3$, etc.

In exemplary embodiments, an anode slurry may be prepared from the above-described anode active material including the carbon-based particles, the silicon-containing coating layer and the carbon coating. For example, the anode slurry may be prepared by mixing and stirring the anode active material with an anode binder, a conductive material and a thickener in a solvent.

For example, the anode active material may include a silicon-carbon-containing particle including the above-described carbon-based particle, the silicon-containing coating layer and the carbon coating.

For example, the anode active material may include the silicon-carbon-containing particles and a graphite-based active material. For example, the graphite-based active material may include artificial graphite and/or natural graphite.

An amount of the silicon-carbon-containing particles may be 3 wt% or more, 5 wt% or more, 10 wt% or more, 15 wt% or more, 20 wt% or more, 25 wt% or more, 30 wt% or more, 35 wt% or more, 40 wt% or more, or 45 wt% or more based on a total weight of the anode active material (e.g., a total weight of the silicon-carbon-containing particles and the graphite-based active material).

An amount of the silicon-carbon-containing particles may be 90 wt% or less, 85 wt% or less, 80 wt% or less, 75 wt% or less, 70 wt% or less, 65 wt% or less, 60 wt% or less, 55 wt% or less, or 50 wt% or less based on the total weight of the anode active material.

In an embodiment, the anode active material may substantially consist of the silicon-carbon containing particles and the graphite-based active material.

For example, the solvent included in the anode slurry may be an aqueous solvent such as water, an aqueous hydrochloric acid solution, an aqueous sodium hydroxide solution, etc.

For example, the anode binder may include a polymer material such as styrene-butadiene rubber (SBR). Examples of the thickener include carboxymethyl cellulose (CMC).

For example, the conductive material may include a material of the same type as that of the above-described conductive material included in the cathode active material layer.

In some embodiments, the anode 130 may include an anode active material layer 120 formed by applying (coating) the above-described anode slurry on at least one surface of an anode current collector 125 and then drying and pressing the anode slurry.

For example, the anode current collector 125 may include a metal that has high conductivity, and may be easily adhered to the anode slurry and non-reactive within a voltage range of the battery. For example, stainless steel, nickel, copper, titanium, an alloy thereof, or copper or stainless steel surface-treated with carbon, nickel, titanium or silver may be used.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Thus, improvements of capacity and power of the lithium secondary battery from using the anode active material according to embodiments of the present invention the may be effectively implemented.

In exemplary embodiments, an electrode cell may be defined by the cathode 100, the anode 130 and the separation layer 140, and a plurality of the electrode cells may be stacked to form the electrode assembly 150 having, e.g., a jelly roll shape. For example, the electrode assembly 150 may be formed by winding, laminating or folding of the separation layer 140.

The electrode assembly 150 may be accommodated together with an electrolyte in the case 160 to define the lithium secondary battery. In exemplary embodiments, a non-aqueous electrolyte may be used as the electrolyte.

For example, the non-aqueous electrolyte may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$; $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

Preparation of carbon-based particle

i) Synthesis of resol oligomer: Phenol and formaldehyde were mixed in a molar ratio of 1:2, and 1.5 wt% of triethylamine was added thereto, followed by a reaction at 85 °C for 4 hours and at 160 rpm (stirring).

ii) Suspension stabilization of resol oligomer: 1 g of PVA was dispersed in a waterdispersible medium, and then added to the resol oligomer.

iii) Curing of resol oligomer: 3g of HMTA as a curing agent was added and reacted at 98° C for 12 hours at 400 rpm (stirring).

iv) Obtaining carbon material: The cured resol oligomer was classified using a sieve, and then washed with $H_2O$.

v) Unreacted monomers and oligomers were removed from the washed resol oligomer using ethanol, and then dried.

vi) Carbonization and activation: The dried resol oligomer was calcined at 900 °C for 1 hour under a nitrogen atmosphere. During the firing, a $CO_2$ gas was introduced at 1 L/min and carbonized at 900 °C.

Formation of silicon-containing coating layer

A silicon-containing coating layer was formed by injecting a silane gas into the CVD coater at a flow rate of 50 mL/min to 100 mL/min and maintaining a temperature below 600 °C for about 120 to 240 minutes at a heating rate of 5 °C/min to 20 °C/min.

Formation of carbon coating

The carbon-based particles having the silicon-containing coating layer were put into a thermal CVD chamber, and then a second firing was performed at about 650 °C for 90 minutes while supplying a mixed gas of methane gas and argon gas to prepare an anode active material having a carbon coating.

Fabrication of anode

The prepared anode active material was left for one day. 96 wt% of a mixture of 15 wt% of the prepared anode active material and 81 wt% of artificial graphite, 1 wt% of CNT as a conductive material, 2 wt% of styrene-butadiene rubber (SBR) as a binder, and 1 wt% of carboxymethyl cellulose (CMC) as a thickener were mixed to from an anode slurry.
The anode slurry was coated on a copper substrate, dried and pressed to form an anode.

Manufacture of lithium half cell (Li-half cell)

A lithium secondary battery including the anode manufactured as described above and a lithium metal as a counter electrode (cathode) was manufactured.
Specifically, a lithium coin half-cell was constructed by interposing a separator (polyethylene, thickness of 20 $\mu$m) between the prepared anode and the lithium metal (thickness of 1 mm).
The assembly of the lithium metal/separator/anode was placed in a coin cell plate, an electrolyte was injected, and a cap was covered and clamped.
The electrolyte was prepared by adding 1 wt% of FEC based on a total weight of the electrolyte solution to a 1.0M $LiPF_6$ solution using a mixed solvent of EC/DEC (30:70, volume ratio).
After impregnation for 12 hours or more after the clamping, a formation charging/discharging was performed (charging condition CC-CV 0.1C 0.01V 0.01C CUT-OFF, discharging condition CC 0.1C 1.5V CUT-OFF).

Example 2

An anode and a lithium half-cell were prepared by the same method as that in Example 1, except that the second firing temperature was about 550 °C.

Example 3

An anode and a lithium half-cell were prepared by the same method as that in Example 1, except that the second firing was performed at about 550 °C for 60 minutes.

Example 4

An anode and a lithium half-cell were prepared by the same method as that in Example 1, except that the second firing was performed for 120 minutes.

Comparative Example 1

An anode and a lithium half-cell were prepared by the same method as that in Example 1, except that the carbon coating was not formed.

Comparative Example 2

An anode and a lithium half-cell were prepared by the same method as that in Example 1, except that the second firing was performed at about 890 °C for 180 minutes.

Comparative Example 3

An anode and a lithium half-cell were prepared by the same method as that in Example 1, except that the second firing was performed at about 750 °C for 90 minutes.

Comparative Example 4

An anode and a lithium half-cell were prepared by the same method as that in Example 1, except that the second firing was performed at about 500 °C for 90 minutes.

Experimental Example

(1) Measurement of ratio of peak intensity ($I_D$) of D band relative to peak intensity ($I_G$) of G band in Raman spectrum (Raman R value)

Raman R values of the carbon coatings included in the anode active materials prepared according to Examples and Comparative Examples was measured under the following conditions. Specifically, three points on the surface of the anode active material were selected and the Raman R value was obtained as an average of the corresponding values.

    i) anode active material tap density: 0.99 g/cm$^3$
    ii) electrode density: 1.3 g/cm$^3$
    iii) Raman spectrometer: in Via, Renishaw (UK)
    iv) Argon ion laser light wavelength: 532 nm
    v) Exposure time: 20 seconds, total number of integration: 10 times

(2) Measurement of ratio of carbon content and silicon content on surface of anode active material through XPS

A carbon content and a silicon content of the surface of the anode active material were measured as an atomic percent (at%) using an XPS in the anode active materials of Examples and Comparative Examples.
The ratio was calculated as a percentage by dividing the measured carbon content by the silicon content.
The XPS was performed using an Al K-alpha beam, a voltage was set to 1486.68 eV, and a beam size was set to 650 $\mu$m. Analysis of the measured XPS results was performed in a CAE (constant analyzer energy) mode.

(3) Evaluation on generation of silicon carbide (SiC)

It was evaluated whether a SiC peak was observed through the XRD analysis for the anode active materials of Examples and Comparative Examples as follows.

    O: SiC peak observed.
    **[00171]** X: No SiC peak observed.

(4) Measurement of carbon coating amount

For the anode active materials of Examples and Comparative Examples, a weight of the anode active material before the carbon coating was measured, a weight of the anode active material after the carbon coating was measured, and a carbon coating amount was calculated as a percentage based on Equation 3 below.

[Equation 3]

$$\text{Carbon coating amount (\%)} = \{(\text{weight of anode active material after carbon coating} - \text{weight of anode active material before carbon coating})/(\text{weight of anode active material after carbon coating})\}*100$$

(5) Measurement of initial charge and discharge capacity

Charging (CC-CV 0.1C 0.01V 0.05C CUT-OFF) and discharging (CC 0.1C 1.5V CUT-OFF) were performed once at room temperature (25 °C) for the lithium half-cells according to Examples and Comparative Examples to measure an initial charge capacity and an initial discharge capacity.

(6) Measurement of initial capacity efficiency

Charging (CC-CV 0.1C 0.01V 0.05C CUT-OFF) and discharging (CC 0.1C 1.0V CUT-OFF) were performed at room temperature (25 °C) for the lithium half-cells according to Examples and Comparative Examples. The cycle was performed 10 times to measure a discharge capacity.

An initial capacity efficiency was calculated as a percentage by dividing the measured discharge capacity by the initial discharge capacity measured in (5).

(7) Measurement of gas generation

The anode slurry according to each of Examples and Comparative Examples was left in a chamber for one day, and a volume (mL) of gas generated was measured.

An amount of gas generation (mL/g) was measured by dividing the gas volume by a weight (g) of the anode slurry before being left.

The measurement results are shown in Tables 1 to 3 below.

[Table 1]

| No. | second firing | | Raman R ($I_D/I_G$) | XPS analysis | | |
|---|---|---|---|---|---|---|
| | temperature (°C) | time (minute) | | C content (at%) | Si content (at%) | content ratio (C/Si) (%) |
| Example 1 | 650 | 90 | 1.58 | 59 | 23 | 257 |
| Example 2 | 550 | 90 | 1.59 | 55 | 25 | 220 |
| Example 3 | 550 | 60 | 1.64 | 40 | 21 | 190 |
| Example 4 | 650 | 120 | 1.60 | 70 | 13.5 | 519 |
| Comparative Example 1 | - | - | - | 36 | 29 | 124 |
| Comparative Example 2 | 890 | 180 | 1.74 | 91 | 0.6 | 15,167 |
| Comparative Example 3 | 750 | 90 | 1.71 | 60 | 20 | 300 |
| Comparative Example 4 | 500 | 90 | 1.76 | 37 | 30 | 123 |

[Table 2]

| No. | SiC generation | carbon coating amount (%) |
|---|---|---|
| Example 1 | X | 5.9 |
| Example 2 | X | 3.1 |
| Example 3 | X | 2.0 |
| Example 4 | X | 6.2 |
| Comparative Example 1 | X | 0 |
| Comparative Example 2 | O | 14.7 |
| Comparative Example 3 | O | 8.8 |
| Comparative Example 4 | X | 0.2 |

[Table 3]

| No. | initial charge capacity (mAh/g) | initial discharge capacity (mAh/g) | initial capacity efficiency (%) | amount of gas generation (mL/g) |
|---|---|---|---|---|
| Example 1 | 612 | 572 | 93.4 | 0 |
| Example 2 | 625 | 584 | 93.4 | 0 |

(continued)

| No. | initial charge capacity (mAh/g) | initial discharge capacity (mAh/g) | initial capacity efficiency (%) | amount of gas generation (mL/g) |
|---|---|---|---|---|
| Example 3 | 628 | 584 | 92.5 | 0.08 |
| Example 4 | 612 | 558 | 90.3 | 0 |
| Comparative Example 1 | 632 | 591 | 93.5 | 0.40 |
| Comparative Example 2 | 346 | 312 | 90.2 | 0 |
| Comparative Example 3 | 377 | 341 | 90.4 | 0 |
| Comparative Example 4 | 633 | 592 | 93.5 | 0.39 |

Referring to Tables 1 to 3, in Comparative Examples where no carbon coating was formed on the silicon-containing coating layer or the Raman R value of the carbon coating exceeded 1.65, degraded initial capacity properties or increased gas generation were provided compared to those from Examples.

Referring to Examples 1 and 3, the lithium half-cell of Example 1 provided improved initial capacity properties and reduced gas generation compared to those from the lithium half-cell of Example 3 where the content ratio of carbon to silicon on the surface of the active material was less than 200%.

Referring to Example 1 and Example 4, the lithium half-cell of Example 1 provided improved initial capacity properties compared to the lithium half-cell of Example 4 where in which the content ratio of carbon to silicon on the surface of the active material exceeded 500 %.

In Comparative Examples 2 and 3, the temperature of the second firing exceeded 700 °C, and the carbon coating did not have a stable structure due to the excessively high temperature, and silicon and carbon reacted to generate SiC. Accordingly, the initial charge and discharge capacity were lowered compared to those from Examples.

In Comparative Example 4, the temperature of the second firing was less than 550 °C, and the carbon coating was not sufficiently formed. Accordingly, the amount of gas generation was increased compared to those from Examples.

## Claims

1. An anode active material for a lithium secondary battery, comprising:

   a carbon-based particle containing pores;
   a silicon-containing coating layer formed at an inside of the pores or on a surface of the carbon-based particle; and
   a carbon coating formed on the silicon-containing coating layer,
   wherein a ratio of a peak intensity ($I_D$) of a D band relative to a peak intensity ($I_G$) of a G band in a Raman spectrum of the carbon coating is 1.65 or less.

2. The anode active material for a lithium secondary battery according to claim 1, wherein a carbon content of the surface of the anode active material measured by an X-ray photoelectron spectroscopy (XPS) relative to a silicon content of the surface measured by the XPS is in a range from 200% to 500%.

3. The anode active material for a lithium secondary battery according to claim 1 or claim 2, wherein the carbon-based particle includes at least one selected from the group consisting of activated carbon, a carbon nanotube, a carbon nanowire, graphene, a carbon fiber, carbon black, graphite, a porous carbon, a pyrolyzed cryogel, a pyrolyzed xerogel and a pyrolyzed aerogel.

4. The anode active material for a lithium secondary battery according to any one of claims 1 to 3, wherein the carbon-based particle has an amorphous structure.

5. The anode active material for a lithium secondary battery according to any one of claims 1 to 4, wherein the silicon-containing coating layer and the carbon coating do not contain silicon carbide (SiC).

6. The anode active material for a lithium secondary battery according to any one of claims 1 to 5, wherein the carbon coating is also formed on a portion where the silicon-containing coating layer is not formed among the inside of the pores and the surface of the carbon-based particle.

7. A lithium secondary battery, comprising:

   an anode comprising an anode active material layer that comprises the anode active material for a lithium secondary battery of any one of claims 1 to 6; and
   a cathode facing the anode.

8. A method of preparing an anode active material for a secondary battery, comprising:

   performing a first firing of a carbon-based particle and a silicon source to form a silicon-containing coating layer at an inside of the pores or on a surface of the carbon-based particle; and
   injecting a carbon source to the carbon-based particle on which the silicon-containing coating layer is formed to form a carbon coating,
   wherein a ratio of a peak intensity ($I_D$) of a D band relative to a peak intensity ($I_G$) of a G band in a Raman spectrum of the carbon coating is 1.65 or less.

9. The method of claim 8, wherein the carbon source includes at least one selected from the group consisting of pitch, glucose, sucrose, a phenol-based hydrocarbon, a resorcinol-based hydrocarbon, a methane gas, an ethylene gas, a propylene gas, an acetylene gas, a polyacetylene, a polyaniline, a polypyrrole and polythiophene.

10. The method of claim 8 or claim 9, wherein the forming of the carbon coating comprises a second firing performed at a temperature from 550 °C to 700 °C.

11. The method of claim 10, wherein the second firing is performed for a period from 60 minutes to 120 minutes.

12. The method of any one of claims 8 to 11, wherein the first firing is performed at a temperature less than 600 °C.

# FIG. 1

107       127

I

150

160

I'

# FIG. 2

140

110 ⎫
105 ⎬ 100
110 ⎭

120 ⎫
125 ⎬ 130
120 ⎭

160

Europäisches
Patentamt

European
Patent Office

Office européen
des brevets

# EUROPEAN SEARCH REPORT

**Application Number**

**EP 23 16 0523**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 924 784 A1 (SHOWA DENKO KK [JP]) 30 September 2015 (2015-09-30) * paragraphs [0014], [0022], [0030]; figure 2 * ----- | 1-7 | INV. H01M4/36 H01M4/38 H01M4/587 H01M4/62 |
| X | US 2020/266444 A1 (KIM JOON SUP [KR] ET AL) 20 August 2020 (2020-08-20) | 1-3,6-11 | |
| A | * paragraphs [0099], [0146], [0150]; examples 1,4 * ----- | 12 | |

TECHNICAL FIELDS
SEARCHED (IPC)

H01M

The present search report has been drawn up for all claims

| Place of search | Date of completion of the search | Examiner |
|---|---|---|
| Munich | 2 August 2023 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 0523

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2023

| Patent document cited in search report | | Publication date | Patent family member(s) | | Publication date |
|---|---|---|---|---|---|
| EP 2924784 | A1 | 30-09-2015 | CN | 104798228 A | 22-07-2015 |
| | | | EP | 2924784 A1 | 30-09-2015 |
| | | | JP | 5599527 B1 | 01-10-2014 |
| | | | JP | WO2014080629 A1 | 05-01-2017 |
| | | | KR | 20150056617 A | 26-05-2015 |
| | | | US | 2015303460 A1 | 22-10-2015 |
| | | | WO | 2014080629 A1 | 30-05-2014 |
| US 2020266444 | A1 | 20-08-2020 | NONE | | |

EPO FORM P0459

For more details about this annex : see Official Journal of the European Patent Office, No. 12/82

**REFERENCES CITED IN THE DESCRIPTION**

**Patent documents cited in the description**

• KR 101591698